# FASCICULE DE BREVET EUROPEEN

(11) **EP 1 953 118 B1**
(45) Date de publication et mention de la délivrance du brevet: **03.04.2013**
(21) Numéro de dépôt: 08290043.2
(22) Date de dépôt: 18.01.2008
(51) Int. Cl.: C01B 37/02, C01B 39/48, B01J 29/035, B01J 20/18, B01J 29/70, B01J 29/74, B01J 37/00

(54) **Solide cristallisé IZM-1 et son procédé de préparation**
Kristallisierter Feststoff IZM-1 und sein Herstellungsverfahren
IZM-1 crystallised solid and preparation method

(30) Priorité: 30.01.2007 FR 0700698
(43) Date de publication de la demande: 06.08.2008
(73) Titulaire: IFP Energies nouvelles, 92852 Rueil-Malmaison Cedex (FR)
(72) Inventeur: Guillon, Emmanuelle, 69390 Vernaison (FR); Martens, Johan, 3040 Huldenberg (BE); Bats, Nicolas, 69320 Feyzin (FR); Fecant, Antoine, 69530 Brignais (FR)

(56) Documents cités:
- EP-A- 1 702 888
- WO-A-99/35087

## Description

### Domaine technique

La présente invention se rapporte à un nouveau solide microporeux cristallisé appelé ci-après IZM-1, au procédé de préparation dudit solide ainsi qu'à l'utilisation dudit solide comme catalyseur, adsorbant ou agent de séparation.

### Art antérieur

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonés ou autres.
Les aluminosilicates microporeux sont généralement préparés à partir d'un mélange réactionnel aqueux contenant des cations alcalins ou alcalino-terreux, des espèces organiques telles que des amines ou des ammoniums quaternaires, des oxides métalliques, du silicium et de l'aluminium.

### Description de l'invention

La présente invention a pour objet un nouveau solide cristallisé, appelé solide cristallisé IZM-1, présentant une nouvelle structure cristalline. Ledit solide présente une composition chimique exprimée sur une base anhydre, en termes de moles d'oxydes, par la formule générale suivante : XO₂ : aY₂O₃ : bM_{2/n}O dans laquelle X représente au moins un élément tétravalent, Y représente au moins un élément trivalent et M est un métal alcalin et/ou un métal alcalino-terreux de valence n, a et b représentant repectivement le nombre de moles de Y₂O₃ et M_{2/n}O et a est compris entre 0 et 0,02 et b est compris entre 0 et 1.

Le solide cristallisé IZM-1 selon l'invention présente un diagramme de diffraction de rayons X incluant au moins les raies inscrites dans le tableau 1. Ce nouveau solide cristallisé IZM-1 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ (dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative I/I₀ affectée à chaque valeur de dₕₖₗ est mesurée d'après la hauteur du pic de diffraction correspondant. Le diagramme de diffraction des rayons X du solide cristallisé IZM-1 selon l'invention comporte au moins les raies aux valeurs de dₕₖₗ données dans le tableau 1. Dans la colonne des dₕₖₗ, on a indiqué les valeurs moyennes des distances inter-réticulaires en Angstrôms (Å). Chacune de ces valeurs doit être affectée de l'erreur de mesure Δ(dₕₖₗ) comprise entre ± 0,6Å et ± 0,01 Å.

**Tableau 1 : Valeurs moyennes des dₕₖₗ et intensités relatives mesurées sur un diagramme de diffraction de rayons X du solide cristallisé IZM-1 calciné**

| 2 thêta (°) | dₕₖₗ (Å) | I/I₀ | 2 thêta (°) | dₕₖₗ (Å) | I/I₀ |
|---|---|---|---|---|---|
| 7,60 | 11,62 | FF | 24,52 | 3,63 | ff |
| 8,78 | 10,06 | mf | 25,03 | 3,56 | ff |
| 10,74 | 8,23 | ff | 25,44 | 3,50 | ff |
| 11,43 | 7,74 | ff | 25,82 | 3,45 | ff |
| 12,45 | 7,11 | ff | 26,24 | 3,39 | ff |
| 14,60 | 6,06 | ff | 26,56 | 3,35 | ff |
| 15,24 | 5,81 | f | 29,14 | 3,06 | ff |
| 16,93 | 5,23 | ff | 29,45 | 3,03 | ff |
| 17,62 | 5,03 | ff | 30,79 | 2,90 | ff |
| 18,15 | 4,88 | ff | 31,45 | 2,84 | ff |
| 18,73 | 4,73 | ff | 31,72 | 2,82 | ff |
| 19,15 | 4,63 | ff | 33,04 | 2,71 | ff |
| 20,76 | 4,27 | ff | 33,60 | 2,67 | ff |
| 21,22 | 4,18 | FF | 34,22 | 2,62 | ff |
| 21,68 | 4,10 | f | 36,28 | 2,47 | ff |
| 22,58 | 3,94 | ff | 37,14 | 2,42 | ff |
| 22,96 | 3,87 | F | 38,50 | 2,34 | ff |
| 23,26 | 3,82 | f | | | |

| | | | | | |
|---|---|---|---|---|---|
| où FF = très fort ; F = fort ; m = moyen ; mf = moyen faible ; f = faible ; ff = très faible. L'intensité relative I/I₀ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85. | | | | | |

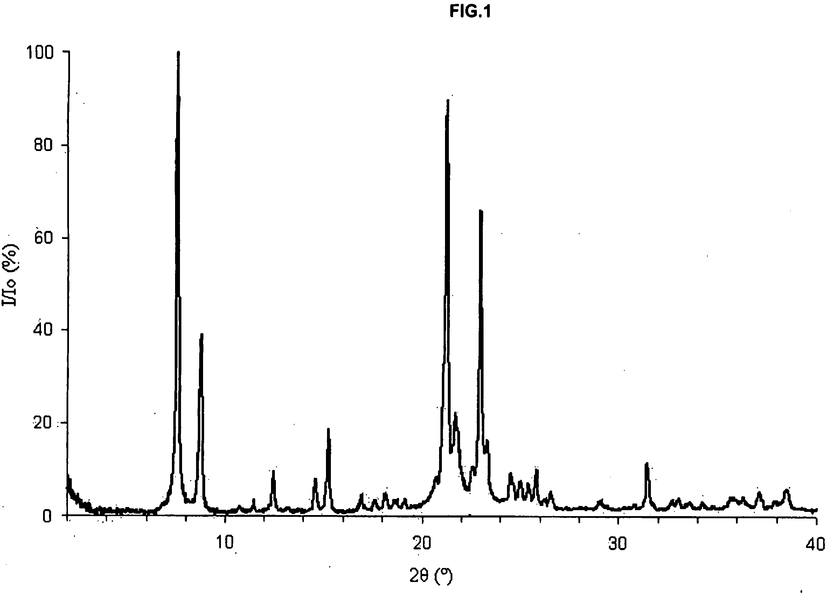

Le solide cristallisé IZM-1 selon l'invention présente une nouvelle structure cristalline de base ou topologie qui est caractérisée par son diagramme de diffraction X sous la forme calcinée donné par la figure 1.

Ledit solide IZM-1 présente une composition chimique exprimée sur une base anhydre, en termes de moles d'oxydes, définie par la formule générale suivante : XO₂ : aY₂O₃ : bM_{2/n}O dans laquelle X représente au moins un élément tétravalent, Y représente au moins un élément trivalent et M est un métal alcalin et/ou un métal alcalino-terreux de valence n. Dans ladite formule, a représente le nombre de moles Y₂O₃ et est compris entre 0 et 0,02, très préférentiellement compris entre 0 et 0,01 et de manière encore plus préférée comprise entre 0,0005 et 0,003 et b représente le nombre de moles de M_{2/n}O et est compris entre 0 et 1, très préférentiellement entre 0 et 0,5 et de manière encore plus préférée entre 0,05 et 0,5. Conformément à l'invention, lorsque a est non nul, b est également non nul.

Conformément à l'invention, X est préférentiellement choisi parmi le silicium, le germanium, le titane et le mélange d'au moins deux de ces éléments et très préférentiement X est le silicium et Y est préférentiellement choisi parmi l'aluminium, le bore, le fer, l'indium et le gallium et très préférentiellement Y est l'aluminium. M est préférentiellement choisi parmi le lithium, le sodium, le potassium, le calcium, le magnesium et le mélange d'au moins deux de ces métaux et très préférentiellement M est le sodium. Selon l'invention, le métal M est avantageusement présent lorsque le solide IZM-1 comporte l'élément Y. De manière préférée, X représente le silicium, le solide cristallisé IZM-1 selon l'invention est alors un solide entièrement silicique lorsque l'élément Y est absent de la composition dudit solide IZM-1. Il est également avantageux d'employer comme élément X un mélange de plusieurs éléments X, en particulier un mélange de silicium avec un autre élement X choisi parmi le germanium et le titane, de préférence le germanium. Ainsi, lorsque le silicium est présent en mélange avec un autre élément X, le solide cristallisé IZM-1 selon l'invention est alors un métallosilicate cristallisé présentant un diagramme de diffraction des rayons X identique à celui décrit dans le tableau 1 lorsqu'il se trouve sous sa forme calcinée. De manière encore plus préférée et en présence d'un élément Y, X est le silicium et Y est l'aluminium : le solide cristallisé IZM-1 selon l'invention est alors un aluminosilicate cristallisé présentant un diagramme de diffraction des rayons X identique à celui décrit dans le tableau 1 lorsqu'il se trouve sous sa forme calcinée.

D'une manière plus générale, ledit solide IZM-1 selon l'invention présente une composition chimique exprimée par la formule générale suivante : XO₂ : aY₂O₃ : bM_{2/n}O : cR : c'S : dH₂O dans laquelle R et S représentent des espèces organiques différentes, X représente au moins un élément tétravalent, Y représente au moins un élément trivalent et M est un métal alcalin et/ou un métal alcalino-terreux de valence n ; a, b, c, c' et d représentant respectivement le nombre de moles de Y₂O₃, M_{2/n}O, R, S et H₂O et a est compris entre 0 et 0,02, b est compris entre 0 et 1, c est compris entre 0 et 5, c' est compris entre 0 et 50 et d est compris entre 0 et 70. Cette formule et les valeurs prises par a, b, c, c' et d sont celles pour laquelle ledit solide IZM-1 se trouve préférentiellement sous sa forme calcinée.

Plus précisément, ledit solide IZM-1, sous sa forme brute de synthèse, présente une composition chimique exprimée par la formule générale suivante : XO₂ : aY₂O₃ : bM_{2/n}O : cR : c'S : dH₂O (I) dans laquelle R et S représentent des espèces organiques différentes, X représente au moins un élément tétravalent, Y représente au moins un élément trivalent et M est un métal alcalin et/ou un métal alcalino-terreux de valence n ; a, b, c, c' et d représentant respectivement le nombre de moles de Y₂O₃, M_{2/n}O, R, S et H₂O et a est compris entre 0 et 0,02, b est compris entre 0 et 1, c est compris entre 0,005 et 2, c' est compris entre 0,01 et 5 et d est compris entre 0,005 et 2.

Dans la formule (I) donnée ci-dessus pour définir la composition chimique du solide cristallisé IZM-1 sous sa forme brute de synthèse, la valeur de a est comprise entre 0 et 0,02, très préférentiellement comprise entre 0 et 0,01 et de manière encore plus préférée comprise entre 0,0005 et 0,003. De manière préférée, b est compris entre 0 et 1, de manière très préférée b est compris entre 0 et 0,5 et de manière encore plus préférée b est compris entre 0,05 et 0,5. La valeur de c est comprise entre 0,005 et 2, avantageusement entre 0,02 et 1. La valeur de c' est comprise entre 0,01 et 5, très préférentiellement comprise entre 0,02 et 2. La valeur prise par d est comprise entre 0,005 et 2, de préférence comprise entre 0,01 et 1.

Sous sa forme brute de synthèse, c'est-à-dire directement issu de la synthèse et préalablement à toute étape de calcination(s) et éventuellement d'échange(s) d'ions bien connue de l'Homme du métier, ledit solide IZM-1 comporte au moins les espèces organiques telles que celles décrites ci-après ou encore leurs précurseurs. Selon l'invention, dans la formule (1) donnée ci-dessus, l'élément R est le 6-(dibutylamino)-1,8-diazabicyclo[5.4.0]undec-7-ene dont la formule développée est donnée ci-dessous et l'élément S est l'éthylène glycol HO-CH₂-CH₂-OH. Lesdites espèces organiques R et S, qui jouent le rôle de structurant, peuvent être éliminées par les voies classiques connues de l'état de la technique comme des traitements thermiques et/ou chimiques.

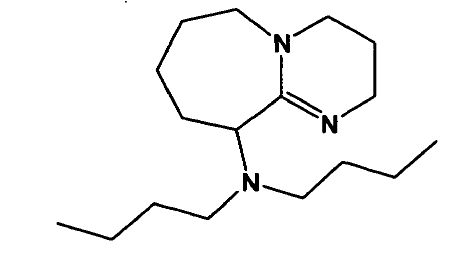

Le solide cristallisé IZM-1 selon l'invention est de préférence un solide zéolithique. L'invention concerne également un procédé de préparation du solide cristallisé IZM-1 selon l'invention dans lequel on fait réagir un mélange aqueux comportant au moins une source d'au moins un oxyde XO₂, éventuellement au moins une source d'au moins un oxyde Y₂O₃, éventuellement au moins une source d'au moins un cation alcalin et/ou alcalino-terreux de valence n, éventuellement au moins une source d'ions hydroxyde au moins deux espèces organiques R et S différentes, le mélange présentant préférentiellement la composition molaire suivante :

| | |
|---|---|
| XO₂/Y₂O₃ : | au moins 50, de préférence au moins 100, |
| H₂O/XO₂ : | 1 à 70, de préférence 2 à 50, |
| R/XO₂ : | 0,02 à 5, de préférence 0,05 à 1, |
| S/XO₂ : | 1 à 50, de préférence 5 à 30, |
| M_{2/n}O/XO₂ : | 0 à 1, de préférence 0,05 à 0,5, |

où X est un ou plusieurs élément(s) tétravalent(s) choisi(s) dans le groupe formé par les éléments suivants : silicium, germanium, titane de préférence le silicium, où Y est un ou plusieurs élément(s) trivalent(s) choisi(s) dans le groupe formé par les éléments suivants : aluminium, fer, bore, indium et gallium, de préférence l'aluminium et où M est un metal alcalin et/ou alcalino-terreux de valence n choisi parmi le lithium, le sodium, le potassium, le calcium, le magnesium et le mélange d'au moins deux de ces métaux, de préférence M est le sodium.

Conformément au procédé selon l'invention, R et S sont des espèces organiques jouant le rôle de structurants organiques. R est le composé azoté 6-(dibutylamino)-1,8-diazabicyclo[5.4.0]undec-7-ene et S est l'éthylène glycol.
La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX HS-40.

La source de l'élément Y peut être tout composé comprenant l'élément Y et pouvant libérer cet élément en solution aqueuse sous forme réactive. Dans le cas préféré où Y est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.
Pour la source de métal M alcalin et/ou alcalino-terreux de valence n, on utilise avantageusement un halogénure ou un hydroxyde dudit métal M.
Selon un mode de réalisation préféré du procédé selon l'invention, on fait réagir un mélange aqueux comportant un oxyde de silicium, éventuellement de l'alumine, du 6-(dibutylamino)-1,8-diazabicyclo[5.4.0]undec-7-ene, de l'éthylène glycol et de l'hydroxyde de sodium.

Le procédé selon l'invention consiste à préparer un mélange réactionnel aqueux appelé gel et renfermant au moins une source d'au moins un oxyde XO₂, éventuellement au moins une source d'au moins un oxyde Y₂O₃, éventuellement au moins une source d'au moins un métal alcalin et/ou alcalino-terreux de valence n, éventuellement au moins une source d'ions hydroxyde, au moins deux espèces organiques R et S différentes. Les quantités desdits réactifs sont ajustées de manière à conférer à ce gel une composition permettant sa cristallisation en solide cristallisé IZM-1 sous sa forme brute de synthèse de formule générale (I) XO₂ : aY₂O₃ : bM_{2/n}O : cR : c'S : dH₂O, où a, b, c, c' et d répondent aux critères définis plus haut lorsque c, c' et d sont supérieurs à 0. Puis le gel est soumis à un traitement hydrothermal jusqu'à ce que le solide cristallisé IZM-1 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférentielle à une température qui ne dépasse pas 175°C jusqu'à la formation des cristaux du solide IZM-1 sous sa forme brute de synthèse. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.
Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation du solide cristallisé IZM-1 au détriment d'impuretés. De tels germes comprennent des solides cristallisés, notamment des cristaux de solide IZM-1. Les germes cristallins sont généralement ajoutés dans une proportion comprise entre 0,01 et 10 % de la masse de l'oxyde XO₂ utilisée dans le mélange réactionnel.
A l'issue de l'étape de traitement hydrothermal conduisant à la cristallisation du solide IZM-1, la phase solide est filtrée, lavée, séchée puis calcinée. L'étape de calcination s'effectue avantageusement par une ou plusieurs étapes de chauffage réalisée à une température comprise entre 100 et 1000°C, de préférence comprise entre 400 et 650°C, pour une durée comprise entre quelques heures et plusieurs jours, de préférence comprise entre 3 heures et 48 heures. De manière préférée, la calcination s'effectue en deux étapes de chauffage consécutives.
A l'issue de ladite étape de calcination, le solide IZM-1 obtenu est celui présentant le diagramme de diffraction de rayons X incluant au moins les raies inscrites dans le tableau 1. Il est dépourvu d'eau ainsi que des espèces organiques R et S présentes dans le solide IZM-1 sous sa forme brute de synthèse.
Le solide IZM-1 sous sa forme calcinée est ensuite prêt pour des étapes ultérieures telles que la déshydratation et/ou l'échange d'ions. Pour ces étapes, toutes les méthodes conventionnelles connues de l'Homme du métier peuvent être employées.

D'une manière générale, le ou les cation(s) M du solide IZM-1 peu(ven)t être remplacé(s) par un ou des cation(s) quelconque de métaux et en particulier par ceux des groupes IA, IB, IIA, IIB, IIIA, IIIB (y compris les terres rares), VIII (y compris les métaux nobles) de même que par le plomb, l'étain et le bismuth. L'échange s'effectue normalement avec une solution contenant un sel hydrosoluble du cation approprié.

Il est également avantageux d'obtenir la forme hydrogène du solide cristallisé IZM-1 selon l'invention. Ladite forme hydrogène peut être obtenue en effectuant un échange d'ions avec un acide, en particulier un acide minéral fort comme l'acide chlorhydrique, sulfurique ou nitrique, ou avec un sel d'ammonium tel que le chlorure, le sulfate ou le nitrate d'ammonium. L'échange d'ions peut être effectué par mise en suspension du solide IZM-1 sous sa forme calcinée en une ou plusieurs fois avec la solution d'échange d'ions. En particulier, lorsqu'un sel d'ammonium est utilisé pour réaliser l'échange d'ions, l'échange ionique est préférentiellement suivi d'une étape de calcination sous flux d'air sec, à une température généralement comprise entre environ 400 et 500°C de manière à générer la formation des protons dans le solide IZM-1 par désorption d'ammoniaque conduisant ainsi à la forme hydrogène.

La présente invention concerne également l'utilisation du solide IZM-1 selon l'invention comme adsorbant pour le contrôle de la pollution ou comme tamis moléculaire pour la séparation. Il est également avantageusement utilisé comme solide acide pour catalyser des réactions, par exemple celles intervenant dans les domaines du raffinage et de la pétrochimie.
La présente invention a donc également pour objet un adsorbant comprenant le solide cristallisé IZM-1 selon l'invention. Lorsqu'il est utilisé comme adsorbant, le solide cristallisé IZM-1 selon l'invention est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silice-alumines ou des argiles. La matrice représente de manière générale entre 2 et 25% en masse de l'adsorbant ainsi formé.

La présente invention a également pour objet un catalyseur comprenant le solide cristallisé IZM-1 selon l'invention, de préférence sous sa forme hydrogène. Lorsqu'il est utilisé comme catalyseur, le solide cristallisé IZM-1 selon l'invention peut être associé à une matrice inorganique, qui peut être inerte ou catalytiquement active, et à une phase métallique. La matrice inorganique peut être présente simplement comme liant pour maintenir ensemble les petites particules du solide cristallisé IZM-1 sous les différentes formes connues des catalyseurs (extrudés, pastilles, billes, poudres), ou bien peut être ajoutée comme diluant pour imposer le degré de conversion dans un procédé qui sinon progresserait à une allure trop rapide, conduisant à un encrassement du catalyseur en conséquence d'une formation importante de coke. Des matrices inorganiques typiques sont notamment des matières de support pour les catalyseurs comme les différentes formes de silice, d'alumine, les silice-alumine, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active. La matrice inorganique peut être un mélange de différents composés, en particulier d'une phase inerte et d'une phase active.

Le solide cristallisé IZM-1 peut également être associé à au moins une autre zéolithe et jouer le rôle de phase active principale ou d'additif.

Toute méthode de mise en forme connue de l'Homme du métier convient pour le présent catalyseur. On pourra utiliser, par exemple, le pastillage ou l'extrusion ou la mise sous forme de billes. La mise en forme du catalyseur contenant le solide IZM-1 selon l'invention et se présentant avantageusement au moins en partie sous forme acide est généralement telle que le catalyseur est de préférence sous forme d'extrudés ou de billes en vue de son utilisation.

La phase métallique peut être introduite intégralement sur le solide IZM-1 selon l'invention. Elle peut être également introduite intégralement sur la matrice inorganique ou encore sur l'ensemble matrice inorganique-solide cristallisé IZM-1 par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments. Les métaux peuvent être introduits soit tous de la même façon, soit par des techniques différentes, à tout moment de la préparation du catalyseur comprenant le solide IZM-1 selon l'invention, avant ou après mise en forme et dans n'importe quel ordre. De plus, des traitements intermédiaires tels que par exemple une calcination et/ou une réduction peuvent être appliqués entre les dépôts des différents métaux.

Les compositions catalytiques comportant le solide IZM-1 conviennent de façon générale à la mise en oeuvre des principaux procédés de transformation d'hydrocarbures et des réactions de synthèse de composés. Lesdites compositions catalytiques trouvent avantageusement leur application dans des réactions d'hydroconversion ayant pour but d'améliorer le point d'écoulement de la charge, réactions dites de déparaffinage. Ces réactions permettent de convertir une charge possédant un haut point d'écoulement en un produit possédant un point d'écoulement plus bas. Ces réactions sont donc applicables, par exemple, pour la réduction du point d'écoulement des gazoles. Elles permettent également de diminuer le point d'écoulement de charges plus lourdes afin d'obtenir des bases huiles présentant de bonnes propriétés à froid et un haut indice de viscosité.

L'invention est illustrée par les exemples suivants qui ne présentent, en aucun cas, un caractère limitatif.

### Exemple 1 : préparation d'un solide IZM-1 selon l'invention.

17,44 g d'une solution de silice, connue sous le terme commercial © Ludox HS-40 commercialisée par Aldrich, est incorporée dans une solution composée de 0,83 g de soude (prolabo), 3,62 g de 6-(dibutylamino)-1,8-diazabicyclo[5.4.0]undec-7-ene (Aldrich), 89,29 g d'éthylène glycol dans 7,26 g d'eau déionisée. La composition molaire du mélange est la suivante : SiO₂ ; 0,10 Na₂O ; 0,11 R ; 9,83 S ; 8,52 H₂O. Le mélange est agité vigoureusement pendant une demi-heure. Le mélange est ensuite transféré, après homogénéisation, dans un autoclave. L'autoclave est chauffé pendant 6 jours à 175°C sous agitation (500 tours/min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivie d'un palier à 550°C maintenu durant 8 heures puis un retour à la température ambiante.
Le produit solide calciné a été analysé par diffraction des rayons X et identifié comme étant constitué de solide IZM-1. Le diagramme de diffraction effectué sur le solide IZM-1 calciné est donné par la figure 1.

### Exemple 2 : préparation d'un solide IZM-1 selon l'invention.

13,87 g d'une solution de silice, connue sous le terme commercial© Ludox HS-40 commercialisée par Aldrich, est incorporée dans une solution composée de 0,668 g de soude (prolabo), 3,11 g de 6-(dibutylamino)-1,8-diazabicyclo[5.4.0]undec-7-ene (Aldrich), 71,19 g d'éthylène glycol dans 11,16 g d'eau déionisée. La composition molaire du mélange est la suivante : SiO₂ ; 0,10 Na₂O ; 0,12 R ; 12,42 S ; 11,75 H₂O. Le mélange est agité vigoureusement pendant une demi-heure. Le mélange est ensuite transféré, après homogénéisation, dans un autoclave. L'autoclave est chauffé pendant 5 jours à 170°C sous agitation (500 tours/min). Le produit cristallisé IZM-1 obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivie d'un palier à 550°C maintenu durant 8 heures puis un retour à la température ambiante.
Le produit solide calciné a été analysé par diffraction des rayons X et identifié comme étant constitué de solide IZM-1. Le diagramme de diffraction effectué sur le solide IZM-1 calciné est donné par la figure 1.

### Exemple 3 : préparation d'un solide IZM-1 selon l'invention.

13,87 g d'une solution de silice, connue sous le terme commercial© Ludox HS-40 commercialisée par Aldrich, est incorporée dans une solution composée de 0,66 g de soude (prolabo), 0,021 g d'aluminate de sodium (carlo erba), 3,11 g de 6-(dibutylamino)-1,8-diazabicyclo[5.4.0]undec-7-ene (Aldrich), 71,19 g d'éthylène glycol dans 11,16 g d'eau déionisée. La composition molaire du mélange est la suivante : SiO₂ : 0,016 Al₂O₃ : 0,10 Na₂O : 0,12 R : 12,42 S : 11,75 H₂O. Le mélange est agité vigoureusement pendant une demi-heure. Le mélange est ensuite transféré, après homogénéisation, dans un autoclave. L'autoclave est chauffé pendant 5 jours à 170°C sous agitation (500 tours/min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivie d'un palier à 550°C maintenu durant 8 heures puis un retour à la température ambiante.
Le produit solide calciné a été analysé par diffraction des rayons X et identifié comme étant constitué de solide IZM-1. Le diagramme de diffraction effectué sur le solide IZM-1 calciné est donné par la figure 1.

### Exemple 4 : préparation d'un adsorbant comprenant le solide IZM-1.

Le solide calciné de l'exemple 1 est mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 h sous air et calcinés à 550°C pendant 2 heures sous flux d'air dans un four à moufle.
L'adsorbant ainsi préparé est composé de 80% du solide zéolithique IZM-1 et de 20% d'alumine.

### Exemple 5 : préparation d'un catalyseur comprenant le solide IZM-1.

Le catalyseur est préparé à partir du solide IZM-1 de l'exemple 3. Le solide est soumis à trois échanges ioniques dans une solution de NH₄NO₃ 10N, à environ 100°C pendant 4 heures pour chaque échange. A l'issue de ces traitements, le solide sous forme NH₄ a un rapport Si/Al atomique global proche de 35, une teneur pondérale en sodium par rapport au poids de zéolithe sèche de 130 ppm. Le solide est ensuite mis en forme par extrusion (diamètre d'extrusion = 1,4 mm) avec un gel d'alumine de manière à obtenir, après séchage et calcination sous air sec, un support qui contient en poids 10 % de solide IZM-1 sous forme hydrogène et 90 % d'alumine.
Ce support est soumis à un échange anionique avec de l'acide hexachloroplatinique en présence d'un agent compétiteur (acide chlorhydrique), de manière à déposer 0,3 % poids de platine par rapport au catalyseur. Le solide humide est ensuite séché à 120°C pendant 12 heures et calciné sous un débit d'air sec à la température de 500°C pendant une heure.

Le catalyseur ainsi obtenu contient en poids, 10,0 % de IZM-1 forme hydrogène, 89,7 % d'alumine et 0,3 % de platine.

## Revendications

1. Solide cristallisé IZM-1 présentant un diagramme de diffraction des rayons X incluant au moins les raies inscrites dans le tableau ci-dessous :
| 2 thêta (°) | dₕₖₗ(Å) | I/I₀ | 2 thêta (°) | dₕₖₗ (Å) | I/I₀ |
|---|---|---|---|---|---|
| 7.60 | 11,62 | FF | 24,52 | 3,63 | ff |
| 8,78 | 10,06 | mf | 25,03 | 3,56 | ff |
| 10,74 | 8,23 | ff | 25,44 | 3,50 | ff |
| 11,43 | 7,74 | ff | 25,82 | 3,45 | ff |
| 12,45 | 7,11 | ff | 26,24 | 3,39 | ff |
| 14,60 | 6,06 | ff | 26,56 | 3,35 | ff |
| 15,24 | 5,81 | f | 29,14 | 3,06 | ff |
| 16,93 | 5,23 | ff | 29,45 | 3,03 | ff |
| 17,62 | 5,03 | ff | 30,79 | 2,90 | ff |
| 18,15 | 4,88 | ff | 31,45 | 2,84 | ff |
| 18,73 | 4,73 | ff | 31,72 | 2,82 | ff |
| 19,15 | 4,63 | ff | 33,04 | 2,71 | ff |
| 20,76 | 4,27 | ff | 33,60 | 2,67 | ff |
| 21,22 | 4,18 | FF | 34,22 | 2,62 | ff |
| 21,68 | 4,10 | f | 36,28 | 2,47 | ff |
| 22,58 | 3,94 | ff | 37,14 | 2,42 | ff |
| 22,96 | 3,87 | F | 38,50 | 2,34 | ff |
| 23,26 | 3,82 | f | | | |
où FF = très fort (FF ≥ 85) ; F = fort (65 ≤F < 85); m = moyen (50 ≤m < 65) ; mf = moyen faible (30 ≤ mf <50) ; f = faible (15 ≤f <30) ; ff = très faible (ff <15), l'intensité relative I/I₀ est donnée en rapport à une échelle d'intensité relative où il est attribué une valeur de 100 à la raie la plus intense du diagramme de diffraction des rayons X, ledit solide cristallié IZM-1 présentant une composition chimique, exprimée sur une base anhydre, en termes de moles d'oxydes, par la formule générale suivante : XO₂ : aY₂O₃ : bM_{2/n}O dans laquelle X représente au moins un élément tétravalent, Y représente au moins un élément trivalent et M est un métal alcalin et/ou un métal alcalino-terreux de valence n, a et b représentant repectivement le nombre de moles de Y₂O₃ et M_{2/n}O et a est compris entre 0 et 0,02 et b est compris entre 0 et 1.

2. Solide cristallisé IZM-1 selon la revendication 1 dans lequel X est le silicium.

3. Solide cristallisé IZM-1 selon la revendication 1 ou 2 dans lequel Y est l'aluminium.

4. Solide cristallisé IZM-1 selon l'une des revendications 1 à 3 dans lequel a est compris entre 0,0005 et 0,003 et b est compris entre 0,05 et 0,5.

5. Procédé de préparation d'un solide cristallisé IZM-1 selon l'une des revendications 1 à 4 comprenant le mélange en milieu aqueux d'au moins une source d'au moins un oxyde XO₂, éventuellement d'au moins une source d'au moins un oxyde Y₂O₃, éventuellement d'au moins une source d'au moins un métal alcalin et/ou alcalino-terreux de valence n, éventuellement d'au moins une source d'ions hydroxyde et d'au moins deux espèces organiques R et S différentes, R étant le 6-(dibutylamino)-1,8-diazabicyclo[5.4.0]undec-7-ene et S étant l'éthylène glycol HO-CH₂-CH₂-OH, le traitement hydrothermal dudit mélange jusqu'à ce que ledit solide cristallisé IZM-1 se forme, suivi des étapes de filtration, de lavage, de séchage et de calcination.

6. Procédé de préparation d'un solide cristallisé IZM-1 selon la revendication 5 tel que la composition molaire du mélange réactionnel est telle que :
| | |
|---|---|
| XO₂/Y₂O₃ | : au moins 50, |
| H₂O/XO₂ | : 1 à 70, |
| R/XO₂ | : 0,02 à 5, |
| S/XO₂ | : 1 à 50, |
| M_{2/n}O/XO₂ | : 0 à 1. |

7. Procédé de préparation d'un solide cristallisé IZM-1 selon la revendication 5 ou 6 tel que des germes sont additonnés au mélange réactionnel.

8. Utilisation du solide cristallisé IZM-1 selon l'une des revendications 1 à 4 ou préparé selon l'une des revendications 5 à 7 comme adsorbant.

9. Utilisation du solide cristallisé IZM-1 selon l'une des revendications 1 à 4 ou préparé selon l'une des revendications 5 à 7 comme catalyseur.

## Claims

1. An IZM-1 crystalline solid with an X ray diffraction diagram including at least the peaks set out in the table below:
| 2 theta (°) | dₕₖₗ(Å) | I/I₀ | 2 theta (°) | dₕₖₗ(Å) | I/I₀ |
|---|---|---|---|---|---|
| 7.60 | 11.62 | Vs | 24.52 | 3.63 | Vw |
| 8.78 | 10.06 | Mw | 25.03 | 3.56 | Vw |
| 10.74 | 8.23 | Vw | 25.44 | 3.50 | Vw |
| 11.43 | 7.74 | Vw | 25.82 | 3.45 | Vw |
| 12.45 | 7.11 | Vw | 26.24 | 3.39 | Vw |
| 14.60 | 6.06 | Vw | 26.56 | 3.35 | Vw |
| 15.24 | 5.81 | W | 29.14 | 3.06 | Vw |
| 16.93 | 5.23 | Vw | 29.45 | 3.03 | Vw |
| 17.62 | 5.03 | Vw | 30.79 | 2.90 | Vw |
| 18.15 | 4.88 | Vw | 31.45 | 2.84 | Vw |
| 18.73 | 4.73 | Vw | 31.72 | 2.82 | Vw |
| 19.15 | 4.63 | Vw | 33.04 | 2.71 | Vw |
| 20.76 | 4.27 | Vw | 33.60 | 2.67 | Vw |
| 21.22 | 4.18 | Vs | 34.22 | 2.62 | Vw |
| 21.68 | 4.10 | W | 36.28 | 2.47 | Vw |
| 22.58 | 3.94 | Vw | 37.14 | 2.42 | Vw |
| 22.96 | 3.87 | S | 38.50 | 2.34 | Vw |
| 23.26 | 3.82 | w | | | |
in which: Vs = very strong (Vs ≥85) ; S = strong (65 ≤ S < 85) ; M = medium (50 ≤ M < 65) ; Mw = medium weak (30 ≤ Mw < 50) ; W = weak (15 ≤ W < 30); Vw = very weak (Vw < 15), the relative intensity I/I₀ is given with respect to a relative intensity scale where a value of 100 is attributed to the most intense peak in the X ray diffraction diagram, and said IZM-1 crystalline solid having a chemical composition, expressed as the anhydrous base in terms of moles of oxides, defined by the following general formula: XO₂: aY₂O₃; bM_{2/n}O in which X represents at least one tetravalent element, Y represents at least one trivalent element and M is an alkali metal and/or an alkaline-earth metal with valency n, a and b respectively representing the number of moles of Y₂O₃ and M_{2/n}O; a is in the range 0 to 0.02 and b is in the range 0 to 1.

2. An IZM-1 crystalline solid according to claim 1, in which X is silicon.

3. An IZM-1 crystalline solid according to claim 1 or claim 2, in which Y is aluminium.

4. An IZM-1 crystalline solid according to one of claims 1 to 3, in which a is in the range 0.0005 to 0.003 and b is in the range 0.05 to 0.5.

5. A process for preparing an IZM-1 crystalline solid according to one of claims 1 to 4, comprising mixing in an aqueous medium at least one source of at least one oxide XO₂, optionally at least one source of at least one oxide Y₂O₃, optionally at least one source of at least one alkali and/or alkaline-earth metal with valency n, optionally at least one source of hydroxide ions and at least two different organic species R and S, R is 6-(dibutylamino)-1,8-diazabicyclo[5.4.0]undec-7-ene and S is ethylene glycol, HO-CH₂-CH₂-OH, hydrothermal treatment of said mixture until said IZM-1 crystalline solid forms, followed by filtration, washing, drying and calcining steps.

6. A process for preparing an IZM-1 crystalline solid according to claim 5, in which the molar composition of the reaction mixture is such that:
| | |
|---|---|
| XO₂/Y₂O₃ | at least 50; |
| H₂O/XO₂ | 1 to 70; |
| R/XO₂ | 0.02 to 5; |
| S/XO₂ | 1 to 50; |
| M_{2/n}O/XO₂ | 0 to 1. |

7. A process for preparing an IZM-1 crystalline solid according to one of claims 5 or 6, in which seeds are added to the reaction mixture.

8. Use, as an adsorbant, of an IZM-1 crystalline solid according to one of claims 1 to 4 or prepared in accordance with one of claims 5 to 8.

9. Use, as a catalyst, of an IZM-1 crystalline solid according to one of claims 1 to 4 or prepared in accordance with one of claims 5 to 8.

## Patentansprüche

1. Kristallisierter Feststoff IZM-1, der ein Röntgenbeugungsdiagramm aufweist, welches mindestens die Signale umfasst, die in der untenstehenden Tabelle aufgeführt sind:
| 2 theta (°) | dₕₖₗ(Å) | I/I₀ | 2 theta (°) | dₕₖₗ(Å) | I/I₀ |
|---|---|---|---|---|---|
| 7,60 | 11,62 | SS | 24,52 | 3,63 | ss |
| 8,78 | 10,06 | ms | 25,03 | 3,56 | ss |
| 10,74 | 8,23 | ss | 25,44 | 3,50 | ss |
| 11,43 | 7,74 | ss | 25,82 | 3,45 | ss |
| 12,45 | 7,11 | ss | 26,24 | 3,39 | ss |
| 14,60 | 6,06 | ss | 26,66 | 3,35 | ss |
| 15,24 | 5,81 | s | 29,14 | 3,06 | ss |
| 16,93 | 5,23 | ss | 29,45 | 3,03 | ss |
| 17,62 | 5,03 | ss | 30,79 | 2,90 | ss |
| 18,15 | 4,88 | ss | 31,45 | 2,84 | ss |
| 18,73 | 4,73 | ss | 31,72 | 2,82 | ss |
| 19,15 | 4,63 | ss | 33,04 | 2,71 | ss |
| 20,76 | 4,27 | ss | 33,60 | 2,67 | ss |
| 21,22 | 4,18 | ss | 34,22 | 2,62 | ss |
| 21,68 | 4,10 | s | 36,28 | 2,47 | ss |
| 22,58 | 3,94 | ss | 37,14 | 2,42 | ss |
| 22,96 | 3,87 | S | 38,50 | 2,34 | ss |
| 23,26 | 3,82 | s | | | |
wobei SS = sehr stark (SS ≥ 85) ; S = stark (65 ≤ S < 85); m = mittel (60 ≤ m < 65) ; ms = mittelschwach (30 ≤ ms < 50) ; s = schwach (15 ≤ s < 30) ; ss = sehr schwach (ss < 15), wobei die relative Intensität I/I₀ unter Bezugnahme aus eine relative Intensitätsskala angegeben wird, auf welcher dem intensivsten Signal des Röntgenbeugungsdiagramms ein Wert von 100 zugewiesen wird, wobei der kristallisierte Feststoff IZM-1 eine chemische Zusammensetzung ausweist, die auf einer wasserfreien Basis, in Mol an Oxiden, durch die folgende allgemeine Formel ausgedrückt wird: XO₂ : aY₂O₃ : bM_{2/n}O, wobei X mindestens ein vierwertiges Element darstellt, Y mindestens ein dreiwertiges Element darstellt und M mindestens ein Alkalimetall und/oder Erdalkalimetall der Wertigkeit n ist, a und b die Anzahl der Mole an Y₂O₃ beziehungsweise M_{2/n}O darstellen und a im Bereich von 0 bis 0,02 liegt und b im Bereich von 0 bis 1 liegt.

2. Kristallisierter Feststoff IZM-1 nach Anspruch 1, wobei X Silicium ist.

3. Kristallisierter Feststoff IZM-1 nach Anspruch 1 oder 2, wobei Y Aluminium ist.

4. Kristallisierter Feststoff IZM-1 nach einem der Ansprüche 1 bis 3, wobei a im Bereich von 0,0005 und 0,003 liegt und b im Bereich von 0,05 und 0,5 liegt.

5. Verfahren zur Herstellung eines kristallisierten Feststoffs IZM-1 nach einem der Ansprüche 1 bis 4, welches das Mischen in wässrigem Milieu mindestens einer Quelle mindestens eines XO₂-Oxids, möglicherweise mindestens einer Quelle mindestens eines Y₂O₃-Oxids, möglicherweise mindestens einer Quelle mindestens eines Alkali- und/oder Erdalkalimetalls der Wertigkeit n, möglicherweise mindestens einer Quelle von Hydroxidionen sowie mindestens zweier unterschiedlich organischer Spezies R und S umfasst, wobei es sich bei R um 6-(Dibutylamino)-1,8-diazabicyclo[5,4,0]undec-7-en und bei S um den Ethylenglykol HO-CH₂-CH₂-OH handelt, woraufhin diese Mischung eine hydrothermale Behandlung erfährt, bis sich der kristallisierte Feststoff IZM-1 bildet, gefolgt von Schritten der Filtration, des Waschens, des Trocknens und des Brennens.

6. Verfahren zur Herstellung eines kristallisierten Feststoffs IZM-1 nach Anspruch 5, derart, dass die molare Zusammensetzung der Reaktionsmischung solgendermaßen ist:
| | |
|---|---|
| XO₂/Y₂O₃ | : mindestens 50, |
| H₂O/XO₂ | : 1 bis 70, |
| R/XO₂ | : 0,02 bis 5, |
| S/XO₂ | : 1 bis 50, |
| M_{2/n}O/XO₂ | : 0 bis 1. |

7. Verfahren zur Herstellung eines kristallisierten Feststoffs IZM-1 nach Anspruch 5 oder 6, derart, dass der Reaktionsmischung Kristallisationskeime zugesetzt werden.

8. Verwendung des kristallisierten Feststoffs IZM-1 nach einem der Ansprüche 1 bis 4, oder der nach einem der Ansprüche 5 bis 7 hergestellt ist, als Adsorptionsmittel.

9. Verwendung des kristallisierten Feststoffs IZM-1 nach einem der Ansprüche 1 bis 4, oder der nach einem der Ansprüche 5 bis 7 hergestellt ist, als Katalysator.
